# EUROPÄISCHE PATENTSCHRIFT

(11) **EP 2 767 059 B1**
(45) Veröffentlichungstag und Bekanntmachung des Hinweises auf die Patenterteilung: **18.11.2015**
(21) Anmeldenummer: 12769929.6
(22) Anmeldetag: 25.09.2012
(51) Int. Cl.: H04L 29/06, H04W 12/12

(54) **Blockieren des Datenaustausches zum Schutz von NFC-Kommunikation**
Blocking of data exchange for protecting a near field communication
Blocage de l'échange de données pour protéger la communication NFC

(30) Priorität: 13.10.2011 DE 102011115860
(43) Veröffentlichungstag der Anmeldung: 20.08.2014
(73) Patentinhaber: Giesecke & Devrient GmbH, 81677 München (DE)
(72) Erfinder: KNOLLER, Otmar, 82515 Wolfratshausen (DE); WACKER, Dirk, 81547 München (DE)
(86) Internationale Anmeldenummer: PCT/EP2012/004013
(87) Internationale Veröffentlichungsnummer: WO 2013/053430

(56) Entgegenhaltungen:
- WO-A2-2009/115997
- ROTTER P: "A Framework for Assessing RFID System Security and Privacy Risks", IEEE PERVASIVE COMPUTING, Bd. 7, Nr. 2, April 2008 (2008-04), Seiten 70-77, XP011207347, ISSN: 1536-1268

## Beschreibung

Die Erfindung betrifft ein mobiles Kommunikationsendgerät zum Austausch von Daten, ein Verfahren zum Blockieren eines Datenaustauschs sowie ein System zum Verhindern einer Man-in-the-Middle Angriff.

Ein Man-in-the-Middle Angriff, kurz MITM-Angriff, auch als Janusangriff bezeichnet, ist eine Angriffsform, die in Kommunikationsnetzen angewendet wird. Ein Angreifer steht dabei entweder physikalisch oder logisch zwischen zwei Kommunikationspartnern. Der Angreifer hat vollständige Kontrolle über den Datenaustausch zwischen diesen beiden Kommunikationspartnern und kann die ausgetauschten Daten nach Belieben einsehen, manipulieren und für seine eigenen Zwecke missbrauchen. Der Angreifer täuscht dabei den beiden Kommunikationspartnern vor, mit dem gewünschten Gegenüber zu kommunizieren, ohne dass es die Kommunikationspartner merken.

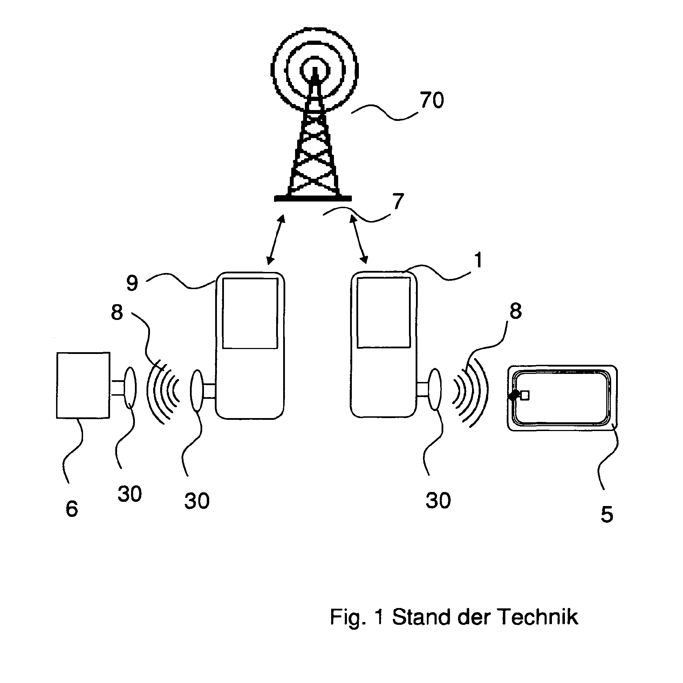

Bei portablen Datenträgern, insbesondere Datenträger, die über ein kontaktloses Kommunikationsnetz kommunizieren, werden sogenannte Relay-Angriff, auch als Ghost and Leech Attacke oder Wormhole Attacke bezeichnet, als eine Ausführungsform der MITM-Angriffe angewendet. In seiner einfachsten Form besteht dieser Angriff darin, den Kommunikationsbereich des portablen Datenträgers auf ein Vielfaches der ursprünglichen Distanz zu erweitern. In Figur 1 ist zur Verdeutlichung ein möglicher Aufbau zur Durchführung eines Relay-Angriffs dargestellt. Die Erläuterungen zu Figur 1 sind in der Figurenbeschreibung enthalten.

Zur Absicherung gegen derartige Angriffe kann der Datenaustausch zwischen den Kommunikationspartnern kryptografisch verschlüsselt werden. Dazu findet eine gegenseitige Authentifizierung der beiden Kommunikationspartner mittels digitaler Zertifikate, ausgehandelter Schlüssel, beispielsweise OTP oder Identitätsstempel innerhalb der Nachricht, z.B. Message Authentication Code, kurz MAC) und/oder dem Austausch eines gemeinsamen kryptografischen Schlüssels statt. Diese Authentifizierung darf allerdings nicht über das gleiche Kommunikationsnetz, insbesondere nicht den gleichen Kommunikationsweg erfolgen, da der Angreifer die Authentisierung der Kommunikationspartner ebenfalls erhält. Diese Authentisierung könnten dann sehr einfach durch Authentisierungsdaten des Angreifers ausgetauscht werden. Da also ein zweiter Kommunikationsweg aufgebaut werden muss, ist diese Lösung in Alttagssituationen wie Bezahltransaktionen, Nahverkehrssystemen, Informationsabfragen und der gleichen unpraktikabel und mit großem Aufwand verbunden.

Heutige, im Handel erwerbbare Kommunikationsendgeräte weisen neben einem ersten Kommunikationsmodul zum Datenaustausch über ein erstes Kommunikationsnetz auch mindestens ein zweites Kommunikationsmodul zum Datenaustausch über ein zweites Kommunikationsnetz, insbesondere dem Nahfeldkommunikationsnetz auf. Diese Kommunikationsendgeräte sollen es einem Benutzer ermöglichen, über möglichst viele unterschiedliche Kommunikationsnetze beispielsweise GSM, UMTS, WLAN, NFC, GPS, Bluetooth, Infrarot und noch vieles mehr, mit ein und demselben Kommunikationsendgerät kommunizieren zu können. So ist es beispielsweise nicht unüblich, dass ein Kommunikationsendgerät für den Mobilfunk neben einem Mobilfunk-Kommunikationsmodul zur Kommunikation über ein Mobilfunk-Kommunikationsnetz weiterhin ein Nahfeldkommunikationsmodul zur Kommunikation mit einem Lesegerät oder einem portablen Datenträger über ein Nahfeldkommunikationsnetz aufweist.

Bei diesen handelsüblichen Geräten ist es ohne Aufwand möglich, den Datenaustausch über das zweite Kommunikationsnetz an den Datenaustausch über das erste Kommunikationsnetz weiterzuleiten. Dazu sind keinerlei Manipulationen am Kommunikationsendgerät, insbesondere keine Hardware-Anpassungen notwendig.

Modernen Kommunikationsendgeräten wird das Weiterleiten des Datenaustauschs durch Programmieren von Anwenderprogrammen, sogenannten Apps, sehr einfach ermöglicht.

Ein MITM-Angriff wird insbesondere bei portablen Datenträgern angewendet, die über ein Nahfeldkommunikationsnetz, kurz NFC-Netz, Daten austauschen. In seiner einfachsten Form besteht dieser Angriff darin, den Kommunikationsbereich des portablen Datenträgers auf ein Vielfaches der ursprünglichen NFC-Kommunikationsreichweite zu erweitern.

Das mobile Kommunikationsendgerät wird in diesem Fall von dem Angreifer mit einer "Relay App" als Anwenderprogramm ausgestattet, wobei mit diesen Anwenderprogrammen das Kommunikationsendgerät zur Emulation eines portablen Datenträgern und/oder der Emulation eines NFC-Lesegeräten geeignet wird.

In einem ersten Fall wird durch die Emulation eines portablen Datenträgers wird einem NFC-Kommunikationspartner, beispielsweise einem NFC-Lesegerät, das Vorhandensein eines portablen Datenträgers vorgetäuscht, obwohl tatsächlich ein mobiles Kommunikationsendgerät die Daten mit dem NFC-Kommunikationspartner austauscht. Der NFC-Kommunikationspartner authentifiziert das mobile Kommunikationsendgerät als den portablen Datenträger und gibt e-Services wie Bezahltransaktionen etc. frei.

In einem alternativen Fall wird einem portablen Datenträger durch Emulation eines NFC-Lesegeräts das Vorhandensein eines NFC-Lesegeräts vorgetäuscht obwohl tatsächlich ein mobiles Kommunikationsendgerät die Daten mit dem portablen Datenträger austauscht. Der portable Datenträger authentisiert sich am mobilen Kommunikationsendgerät im Irrglauben, sich an einem NFC-Lesegerät zu authentisieren und gibt sensible Daten, beispielsweise PIN, Schlüssel, Signaturen, Passwörter etc frei.

Ein Angreifer, der im Besitz von zwei handelsüblichen Kommunikationsendgeräten ist, kann einen Relay-Angriff gegenüber einem Besitzer eines portablen Datenträgers gemäß Figur 1 durchführen, ohne am Kommunikationsendgerät Veränderungen oder Anpassung an der Hardware vornehmen zu müssen. Somit ist jedes käuflich erwerbbare Kommunikationsendgerät für einen MITM-Angriff tauglich, sodass nur sehr geringe kriminelle Energie notwendig, um tatsächlich einen MITM-Angriff durchzuführen.

Der Artikel "A framework for assessing RFID System Security and Privacy Risks" von P. Rotter schlägt zur Verhinderung eines MITM-Angriffes eine vollständige Abschirmung des Datenträgers vor. WO 2009115997 A2 zeigt den Oberbegriff von Anspruch 1.

Der Erfindung liegt daher die Aufgabe zugrunde, ein Kommunikationsendgerät und ein Verfahren bereitzustellen, mit welchem der Datenaustausch ohne großen Aufwand weiter abgesichert wird. Insbesondere soll die Durchführung eines MITM-Angriffs verhindert oder zumindest stark erschwert werden. Insbesondere soll es Angreifern nicht möglich sein, mittels handelsüblicher Kommunikationsendgeräte, Daten, die über ein zweites Kommunikationsnetz ausgetauscht werden, über ein erstes Kommunikationsnetz, derart weiterzuleiten, das damit ein Relay-Angriff durchgeführt werden kann. Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch ein mobiles Kommunikationsendgerät zum Austausch von Daten über ein erstes Kommunikationsnetz mit einem zweiten, vom ersten Kommunikationsendgerät räumlich entfernten Kommunikationsendgerät gelöst. Das Kommunikationsendgerät weist ein erstes Kommunikationsmodul auf, welches ausgebildet ist, um Daten mit dem zweiten mobilen Kommunikationsendgerät über das erste Kommunikationsnetz auszutauschen. Das Kommunikationsendgerät weist ein zweites Kommunikationsmodul auf, welches ausgebildet ist, um Daten mit einem portablen Datenträger über ein zweites Kommunikationsnetz, insbesondere ein Nahfeldkommunikationsnetz, auszutauschen. Das Kommunikationsendgerät weist weiterhin eine zentrale Steuereinheit auf, welche ausgebildet ist, um den Datenaustausch zwischen dem ersten und dem zweiten Kommunikationsmodul zu steuern. Die zentrale Steuereinheit weist eine Blockiereinheit auf, wobei die Blockiereinheit den Datenaustausch über das erste Kommunikationsnetz blockiert, sobald der zentralen Steuereinheit ein Datenaustausch über das zweite Kommunikationsnetz angezeigt wird.

Mit dem erfindungsgemäßen Kommunikationsendgerät wird erreicht, dass der Datenaustausch, der über das zweite Kommunikationsmodul an die zentrale Steuereinheit zur weiteren Verarbeitung gesendet wird, von dem Kommunikationsendgerät nicht über das erste Kommunikationsmodul weitergeleitet werden kann. Durch das erfindungsgemäße Blockieren ist es nicht möglich, den von dem portablen Datenträger empfangenen Datensatz direkt über das erste Kommunikationsmodul an das zweite, vom ersten Kommunikationsendgerät örtlich entfernte Kommunikationsendgerät zu senden. Somit können sicherheitsrelevante Daten bei einem angezeigten NFC-Datenaustausch nicht über das erste Kommunikationsnetz weitergeleitet werden. Dadurch können beispielsweise NFC-fähige Endgeräte nicht als Angriffswerkzeug für Relay-Angriffe eingesetzt werden, wodurch Relay-Attacke verhindert und erheblich erschwert werden.

Die Blockiereinheit ist dabei in Form eines Sicherheitselements in das Kommunikationsendgerät integriert. Das Sicherheitselement ist insbesondere als Hardwarekomponente ausgestaltet und als ein fest integrierter Bestandteil im Kommunikationsendgerät angeordnet, wobei es entweder nicht aus dem Kommunikationsendgerät entnommen werden kann, beispielsweise als M2M Modul, Co-Prozessor bzw. Trusted Platform Modul oder als ein entnehmbares Modul mit Sicherheitsfunktionalität mit dem Kommunikationsendgerät verbunden ist, beispielsweise als SIM-Karte oder als Massenspeicherkarte, zum Beispiel MicroSD-Karte. Dadurch ist die Blockiereinheit innerhalb eines handelsüblichen Kommunikationsendgeräts in der Lage das Weiterleiten des Datenaustauschs zur Durchführung eines Relay-Angriffs zu unterbinden.

Das Blockieren mittels der Blockiereinheit erfolgt beispielsweise durch unveränderliche Einstellungen innerhalb des Betriebssystems des Kommunikationsendgeräts. Das Betriebssystem unterbindet bei angezeigtem Datenaustausch über das zweite Kommunikationsnetz jeglichen Datenaustausch über andere Kommunikationsmodule, sodass alle bereits etablierten oder aufgebauten Kommunikationen, insbesondere TCP/IP basierter Datenaustausch, unterbrochen wird. Diese kann beispielsweise über eine automatische Regelanpassung innerhalb der Kommunikationsendgeräte erfolgen, beispielsweise einer Firewall-Einstellung erfolgen.

Alternativ ist die Blockiereinheit eine Software-Komponente innerhalb einer Trusted Exectution Environment, kurz TEE. Die TEE ist dann eine sichere Umgebung innerhalb der zentralen Steuereinheit des Kommunikationsendgeräts und garantiert den Schutz vor einem Weiterleiten des Datenaustauschs zum Zwecke eines Relay-Angriffs. Ein Beispiel für eine TEE ist die sogenannte Trustzone.

Mit Blockieren wird erfindungsgemäß verstanden, dass sämtlicher Datenverkehr zwischen dem ersten Kommunikationsmodul und der zentralen Steuereinheit verhindert wird. Dies erfolgt beispielsweise durch ein Schaltelement auf der(den) entsprechenden Datenleitung(en), dem Deaktivieren der Versorgungsspannung für jedes erste Kommunikationsmodul oder dem Übertragen von Sinnlos-Befehlen an die ersten Kommunikationsmodul, sodass die ersten Kommunikationsmodule nicht in der Lage sind, die von dem zweiten Kommunikationsmodul empfangenen Daten über das erste Kommunikationsnetz weiterzuleiten.

Der Austausch von Daten umfasst dabei zum einen Sprachdaten, die während eines Gesprächs zwischen zwei Kommunikationspartnern übertragen werden sollen, als auch maschinenlesbare und maschinenbearbeitbare Daten, in der Regel digitale Repräsentation von Information.

Als Kommunikationsnetz wird hierin eine Einrichtung bzw. eine Infrastruktur für die Übermittlung, die Übertragung und den Austausch von Daten bzw. Informationen verstanden. Die erfindungsgemäßen Kommunikationsnetze stellen dazu Kommunikationsverbindungen zwischen mindestens zwei Kommunikationsendgeräten her. In Kommunikationsnetzen werden meist hierarchisch aufgebaute Architekturmodelle, beispielsweise das OSI-Modell, zum standardisierten Datenaustausch angewendet.

In dieser Anmeldung wird das erste Kommunikationsnetz und das zweie Kommunikationsnetz anhand der Charakteristik des Kommunikationsnetzes unterschieden. Charakteristische Eigenschaften sind beispielsweise die Kommunikationsreichweite, die Kommunikationsfrequenz, das Medium, über welches das Kommunikationsnetz die Daten austauscht und/oder das Kommunikationsprotokoll. Weitere unterscheidende Merkmale für die hier aufgeführten Kommunikationsnetze sind verbindungslose oder verbindungsorientierte Kommunikation, synchrone oder asynchrone Kommunikation sowie simplex, halbduplex oder (voll-) duplex Kommunikation.

Insbesondere ist das erste Kommunikationsnetz ein Funknetz ein Netz, in dem der Datenaustausch über ein sogenanntes TCP-IP Protokoll erfolgt. Beispielsweise ein Mobilfunknetz oder ein Wireless Local Area Network gemäß Standard IEEE 802.11, kurz W-LAN, oder dergleichen.

Als Mobilfunknetz ist das "Global System for Mobile Communications", kurz GSM, als Vertreter der zweiten Generation oder das General Packet Radio Service, kurz GPRS, und "Universal Mobile Telecommunications System", kurz UMTS, als Vertreter der dritten Generation oder das "Long-Term-Evolution", kurz LTE, als Vertreter der vierten Generation von Mobilfunknetzen beispielhaft erwähnt.

Als zweites Kommunikationsnetz ist insbesondere ein Nahfeldkommunikationsnetz, kurz NFC-Netz, zu verstehen. Diese Technik wird beispielsweise in den hier beschriebenen Kommunikationsendgeräten in Form eines zweiten Kommunikationsmoduls integriert, um einen Datenaustausch zwischen den Kommunikationsendgeräten mit einem NFC-Lesegerät zu ermöglichen. Wie in dem Standard ISO/IEC 18092 näher beschrieben, gibt es in NFC-Netzen einen aktiven Kommunikationsmodus und einen passiven Kommunikationsmodus. Die typische Reichweite von NFC-fähigen Endgeräten beträgt in etwa 20 cm. NFC-fähige Endgeräte sind ebenfalls in der Lage, mit kontaktlosen portablen Datenträgern zu kommunizieren oder einen kontaktlosen Datenträger zu simulieren. Das Kommunikationsendgerät ist dabei in den Betriebsmodi "Card Emulation", "Reader Emulation" und "Peer to Peer" (P2P) betreibbar, sodass portable Datenträger mit dem Kommunikationsendgerät einen Datenaustausch betreiben können.

Kommunikationsendgeräte im Sinne der Erfindung sind Geräte, welche an einem Kommunikationsabschluss des ersten Kommunikationsnetzes angeschlossen sind. Dabei kann es sich um eine kontaktbehaftete oder kontaktlose Verbindung handeln. Beispielsweise Smart Phones, Mobilfunktelefone, Mobilfunkmodems, PDA's, Laptops, Netbooks, Tablet-PC's oder dergleichen, die zumindest ein erstes Kommunikationsmodul und ein zweites Kommunikationsmodul aufweisen, werden hier als Kommunikationsendgeräte angesehen.

Als ein Kommunikationsmodul wird eine funktionelle Hardware-Einheit verstanden, die innerhalb des Kommunikationsendgeräts angeordnet ist und den Datenaustausch über das, dem Kommunikationsmodul entsprechende Kommunikationsnetz koordiniert. Dabei ist insbesondere die Umsetzung in ein entsprechendes Kommunikationsprotokoll und die Anpassung an das entsprechende Übertragungsmedium eines von der zentralen Steuereinheit kommenden Datensatz zu verstehen. Respektive erfolgt die Umsetzung und Anpassung eines an die Steuereinheit bereitzustellendes Datensatzes in dem Kommunikationsmodul.

Bei einem portablen Datenträger handelt es sich vorzugsweise um Datenträger mit entsprechenden Sicherheitsfunktionalitäten, wie z.B. Smart Cards, Token, Massenspeicherkarten, Multimediakarten, RFID-Tags, NFC-Tags und/ oder um elektronische Identitätsdokumente, wie beispielsweise einem elektronischen Personalausweis, einem Reisepass mit, auf einem Chip gespeicherten maschinenlesbaren Identifikationsdaten einer Person. Insbesondere wird eine Chipkarte unter dem Begriff portablen Datenträger verstanden, wobei das Anwendungsgebiet der Chipkarte sehr vielfältig ist, beispielsweise als Kredit- oder Debit-Bezahlkarte, Gesundheitskarte, Zutrittsberechtigungskarte, Firmenausweis, Identifikationskarte, elektronischer Fahrzeugschein oder Führerschein.

Diese portablen Datenträger haben insbesondere eine kontaktlose Schnittstelle zum Austausch von Daten über ein Nahfeldkommunikationsnetz als zweites Kommunikationsnetz, beispielesweise gemäß ISO/IEC 14443, ISO/IEC 15693 und/oder ISO/IEC 18092 Standard.

In einer vorteilhaften Ausgestaltung weist das zweite Kommunikationsmodul Mittel zum Anzeigen des Datenaustauschs über das zweite Kommunikationsnetz auf. Alternativ weist die zentrale Steuereinheit eine Erkennungseinheit zum Erkennen des Datenaustauschs über das zweite Kommunikationsnetz auf. Das Mittel zum Anzeigen kann beispielsweise eine Einheit zum Generierung eines elektrischen Anzeigesignals sein, welches über das zweite Kommunikationsmodul an die zentrale Steuereinheit angelegt wird, um Anzuzeigen, dass der portable Datenträger in Kommunikationsreichweite ist. Somit ist eine Kommunikation über das erste Kommunikationsnetz mit dem entfernten Kommunikationsendgerät solange möglich, bis das Mittel den Datenaustausch mit dem zweiten Kommunikationsmodul anzeigt. Dies verkürzt die Zeit des Blockierens, wodurch ein Benutzer des Endgeräts das Blockieren im Idealfall nicht bemerkt.

In einer besonders vorteilhaften Ausgestaltung unterbindet die Blockiereinheit des Datenaustauschs über das erste Kommunikationsnetz solange, bis der Datenaustausch über das zweite Kommunikationsnetz beendet ist. Ab diesem Zeitpunkt ist eine Weiterleitung der Daten über das zweite Kommunikationsnetz möglich.

In einer alternativen Ausgestaltung verzögert die Blockiereinheit den Datenaustausch über das erste Kommunikationsnetz zeitlich für eine vordefinierte Zeitspanne. Beispielsweise ist eine Verzögerungseinheit vorgesehen, die bei einem Datenaustausch über das zweite Kommunikationsnetz den Datenaustausch über das erste Kommunikationsnetz prinzipiell verzögert. Speziell bei dieser Ausgestaltung ist es vorteilhaft, wenn die gemäß Standardisierung vorgesehene Frame Waiting Time Extension für diese Kommunikation nicht gilt. Diese Frame Waiting Time Extension dient dazu, einem Kommunikationspartner mitzuteilen, dass noch weitere Daten folgen, aber momentan noch nicht übertragen werden. Gemäß Kontaktloskommunikationsprotokollen sind Waiting Time Extensions bis zu 5 Sekunden vorgesehen, um Daten für den Kommunikationspartner bereitzustellen. Um Relay-Angriffe mittels Distance Bounding Protokollen detektieren zu können, wird hier vorgeschlagen, diese Waiting Time Extensions in den standardisierten Kontaktloskommunikationsprotokollen nicht zuzulassen. Durch das Verzögern mittels Blockiereinheit wird die Übertragungszeit künstlich verlängert, wodurch Relay-Attacken leichter detektierbar sind.

Bei einer Kommunikation über ein NFC-Netz ist als automatische Sicherheitsmaßnahme häufig ein Frage-Antwort Prinzip vorgesehen. Bei der klassischen Anwendung hält ein Besitzer den portablen Datenträger an das NFC-Lesegerät. Das NFC-Lesegerät sendet Authentifizierungsforderungen, die der portable Datenträger in einer gewissen Zeitspanne beantworten muss. Wird diese Authentifizierungsforderung des portablen Datenträgers innerhalb einer gewisse Zeitspanne nicht oder falsch erwidert, ist die Authentifizierung fehlgeschlagen.

Für einen Relay-Angriff ist es daher notwendig, dass der Datenaustausch über das erste Kommunikationsnetz kontinuierlich verläuft. Wird diese Kontinuität erfindungsgemäß unterbrochen, registriert das NFC-Lesegerät eine zu große Zeitspanne für eine erwartete Antwort und erklärt die Authentisierung des portablen Datenträgers für fehlgeschlagen.

Erfindungsgemäß ist zur Lösung der Aufgabe auch ein Verfahren zum Blockieren eines Datenaustauschs über ein erstes Kommunikationsnetz zwischen einem mobilen Kommunikationsendgerät und einem zweiten Kommunikationsendgerät vorgesehen. Das Verfahren umfasst die Schritte: Senden oder Empfangen einer Kommunikationsanfrage über ein zweites Kommunikationsnetz, insbesondere ein Nahfeldkommunikationsnetz; Blockieren des Datenaustauschs über das erste Kommunikationsnetz durch eine Blockiereinheit innerhalb des mobilen Kommunikationsendgeräts; Austauschen von Daten über das Kommunikationsnetz mit dem Kommunikationsendgeräts, wobei das Beenden des Datenaustauschs in der Blockiereinheit angezeigt wird; Beenden des Blockierens des Datenaustauschs über das erste Kommunikationsnetz durch eine Blockiereinheit innerhalb des mobilen Kommunikationsendgeräts.

Im Erfindungsgrundgedanken ist weiterhin ein System zur Verhinderung einer Man-in-the-middle Attacke vorgesehen mit den Systemkomponenten: Mobiles Kommunikationsendgerät, eingerichtet zum Datenaustausch mit einem zweiten Kommunikationsendgerät über ein erstes Kommunikationsnetz; Portabler Datenträger, eingerichtet zum Datenaustausch mit dem ersten mobilen Kommunikationsendgerät über ein zweites Kommunikationsnetz, insbesondere ein Nahfeldkommunikationsnetz; Zweites Kommunikationsendgerät, eingerichtet zum Datenaustausch mit dem ersten mobilen Kommunikationsendgerät über das erste Kommunikationsnetz, wobei das zweite Kommunikationsendgerät vom mobilen Kommunikationsendgerät räumlich entfernt angeordnet ist; Lesegerät zum Austausch von Daten über das zweite Kommunikationsnetz; Blockiereinheit in dem ersten Kommunikationsendgerät einen Datenaustausch über das erste Kommunikationsnetz mit dem zweiten Kommunikationsendgerät blockiert, wenn das erste Kommunikationsendgerät mit dem portablen Datenträger Daten über das zweite Kommunikationsnetz austauscht, wobei durch das Blockieren ein Man-in-the-Middle Angriff verhindert wird.

Auf dem Kommunikationsendgerät sind mitunter bereits mehrere Anwenderprogramme gestartet, die ggf. über das erste Kommunikationsnetz im ständigen Datenaustausch mit einem TCP-IP Server stehen, beispielsweise "Wo-bin-ich"- Applikationen, die in gewissen Zeitabständen die geographische Position eines Benutzers weiterleiten, Informations-Applikationen, die zu einem momentanen Standort des Benutzers automatisch Informationen auf das Endgerät laden. Derartige Applikationen werden während eines Datenaustauschs über das zweite Kommunikationsmodul ihre Verbindung über das erste Modul verlieren. Dies stellt allerdings keine Einschränkung für den Benutzer dar, da das Blockieren des Datenaustauschs über das erste Kommunikationsendgerät zeitlich stark befristet und sehr kurz ist und eine Interaktion zwischen zweitem und erstem Kommunikationsnetz nicht notwendig ist. Die Erfindung zielt darauf ab, dass während eines Datenaustauschs über NFC als zweites Kommunikationsnetz nicht gleichzeitig über das erste Kommunikationsnetz Daten ausgetauscht werden können, wodurch das simultane Weiterleiten von sicherheitskritischen Daten verhindert ist und das Weiterleiten an sich zumindest eine Zeitspanne dauert, die einen Relay-Angriff erkennen lässt.

Wird bei einer Transaktion die Interaktion des Benutzers gefordert, sind Relay-Angriffe nicht möglich. Das hier beschriebene Angriffsszenario wendet sich gegen, für einen Datenträgerbesitzer unbemerkten Datenaustausch.

Das Unterbinden des Mithörens während eines MITM Angriffs durch beispielsweise Schadsoftware, wie Trojaner, Würmer oder Viren wird in dieser Anmeldung nicht verhindert d.h. auch wenn der Datenaustausch über das erste Kommunikationsmodul unterbunden wird, können sicherheitsrelevante Daten im Kommunikationsendgerät weiterhin gesammelt werden und zu einem späteren Zeitpunkt, wenn die Blockade beendet ist versendet werden. Da Transaktionen über das zweite Kommunikationsnetz in der Regel gegen Replay-Angriffe kryptografisch gesichert sind und ein Verwenden der Kryptogramme in einer späteren Transaktion über das zweite Kommunikationsnetz nicht möglich sind, stellt dies keine Einschränkung der Erfindung dar.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: System zum Durchführen eines Relay-Angriffs gemäß dem Stand der Technik
- Figur 2: Ein erfindungsgemäßes Kommunikationsendgerät
- Figur 3: Einen skizzierten Verfahrensablauf für ein erfindungsgemäßes Verfahren zum Blockieren eines Datenaustauschs

Figur 1 zeigt ein System zum Durchführen eines Relay-Angriffs gemäß dem Stand der Technik. Das System weist im Wesentlichen vier Systemkomponenten auf, einen portablen Datenträger 5, ein mobiles Kommunikationsendgerät 1, ein zweites Kommunikationsendgerät 9 und ein NFC-Lesegerät 6. In Figur 1 wird eine NFC-fähige Chipkarte als portabler Datenträger 5 angegriffen.

Bei dieser Chipkarte 5 wird ohne das Wissen des Besitzers der Chipkarte 5 bzw. ohne dessen Zustimmung ein Datenaustausch über ein NFC- Kommunikationsnetz 8 aufgebaut. Dazu wird ein zweites Kommunikationsmodul 3 innerhalb eines Kommunikationsgeräts 1 zum Datenaustausch über das NFC-Netz 8 verwendet. Ein entferntes zweites Kommunikationsendgerät 9 empfängt die Daten, die der Chipkarte 5 abgefragt wurden. Dieses entfernte Endgerät kann direkt mit dem ersten Kommunikationsendgerät 1 Daten austauschen oder wie in Figur 1 gezeigt, eine Mobilfunkverbindung 7 als erstes Kommunikationsnetz verwenden. In letzterem Fall sind weitere Mobilfunkinstanzen 70 vorgesehen, um den Datenaustausch zwischen den beiden Endgeräten weiterzuleiten. Die erhaltenen NFC-Daten von der Chipkarte 5 werden über die CPU als zentrale Steuereinheit 4 des Endgeräts 1 in den Datenaustausch über das erste Kommunikationsnetz 7 umgesetzt.

Mit Hilfe der im Endgerät 9 erhaltenen Daten der Chipkarte 5 können nun Transaktionen an dem NFC-Lesegerät 6 durchgeführt werden, ohne dass der Besitzer der Chipkarte 5 dies bemerkt. Die Transaktion ist prinzipiell nicht in ihrer Art beschränkt. Beispielsweise kann eine solche Transaktion eine Bezahltransaktion an einem Bezahlterminal sein.
Der Angreifer verwendet das erste Kommunikationsendgerät 1, auch als Leech-Terminal bezeichnet, in Kommunikationsreichweite zur "echten" kontaktlosen Chipkarte 4. Die Nahfeldkommunikation 8 wird nun derart verstärkt, dass sie über mehrere Meter Entfernung weiterhin funktioniert. Damit kann der Angreifer mit einem zweiten Kommunikationsendgerät 9, auch als Ghost-Datenträger bezeichnet, in einer Entfernung, die wesentlich größer als die eigentliche Kommunikationsreichweite eines NFC-Netzes ist, mit der "echten" Chipkarte 5 Transaktionen durchführen. Die Entfernung lässt sich weiter steigern, indem die Nahfeldkommunikation 8 nicht nur über einige wenige Meter verstärkt, sondern komplett über das Kommunikationsnetz 7, hier das Mobilfunknetz geleitet wird.

Der Angriff könnte sich in der Praxis beispielsweise folgendermaßen abspielen: Der Angreifer verbindet das Endgerät 1 mit dem Ghost-Datenträger 9 über das Mobilfunknetz 7, wodurch ein stetiger Datenaustausch 11 zwischen dem mobilen Kommunikationsendgerät 1 und dem zweiten, weit vom Kommunikationsendgerät 1 entfernten Kommunikationsendgerät 9 ermöglicht ist. Ein stetiger Datenaustausch, auch als Daten-Stream bezeichnet, ist notwendig, um einen Relay-Angriff wirksam durchführen zu können, da ansonsten die Frage-Antwort-Zeitspanne zwischen dem NFC-Lesegerät 6 und dem Datenträger 5 zu groß sind und der Relay-Angriff erkannt werden würde.

Im Folgeschritt tauscht der Angreifer beispielsweise in einem Hallenbad oder Fitnessstudio mit seinem handelsüblichen Kommunikationsendgerät 1 in einem der Spinde Daten mit einer Chipkarte 5 aus, wenn diese in NFC-Kommunikationsreichweite ist. Der Angreifer emuliert dazu das Nahfeldkommunikationslesegerät 6, um Daten mit einem portablen Datenträger 5 auszutauschen. Der portable Datenträger 5 sendet nun ggf. sicherheitsrelevante Daten, wie kryptographische Schlüssel, persönliche Identifizierungsnummern, Passwörter etc, an das mobile Kommunikationsendgerät 1. Wird nun ein handelsübliches Kommunikationsendgerät 1 verwendet, beispielsweise ein Smart Phone, können die über das NFC-Netz 8 ausgetauschten Daten ohne Hardwaremanipulation im Smart Phone an das zweite Kommunikationsendgerät 9 weitergeleitet werden.

Mittels heutzutage handelsüblicher Kommunikationsendgeräte 1 ist es für einen Angreifer sehr einfach möglich, einen derartigen MITM-Angriff durchzuführen, da die handelsüblichen Kommunikationsendgeräte 1 aufgrund ihrer baulichen Beschaffenheit rein technisch in der Lage sind, Daten, die über verschiedene Kommunikationsnetze 7, 8 auszutauschen und in ein jeweils anderes Kommunikationsnetz 7, 8 weiterzuleiten. Diese Daten werden nun vom zweiten Kommunikationsendgerät 9 umgesetzt in Daten, die an das Nahfeldkommunikationslesegerät 6 gesendet werden. Dazu wird der Ghost-Datenträger 9 in NFC-Kommunikationsreichweite mit einem NFC-Lesegerät 6 gebracht. Das NFC-Lesegerät ist beispielsweise ein NFC-Bezahlterminal. Die Nahfeldkommunikation 8 zwischen dem Bezahlterminal 6 und der "echten" Chipkarte 5 wird dabei über die beiden Kommunikationsendgeräte 1 und 9 verlängert. Das Lesegerät 6 authentifiziert das zweite Kommunikationsendgerät 9 als den portablen Datenträger 5 und schaltet Services, Transaktionen, Zugangsberechtigungen etc. frei, obwohl der portable Datenträger 5 nicht anwesend ist. Der Besitzer der Chipkarte 5 bemerkt von diesem Angriff nichts. Für das NFC-Lesegerät 6 läuft stattdessen eine "echte" Transaktion ab.

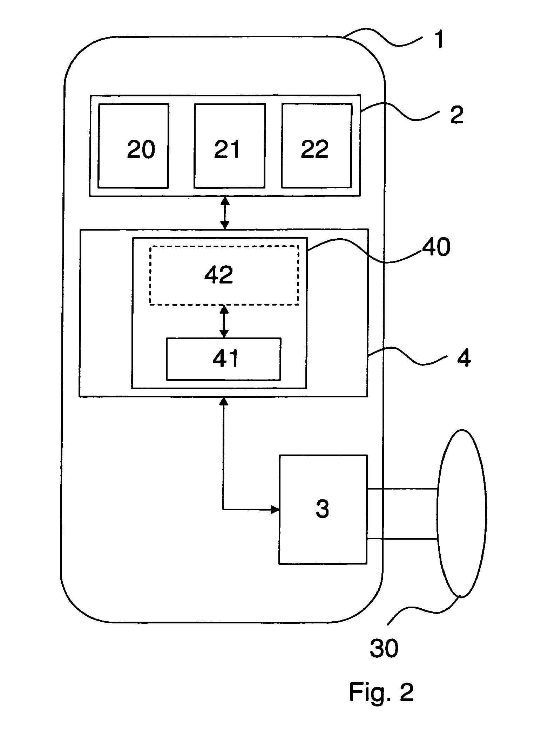

In Figur 2 ist nun ein erfindungsgemäßes Kommunikationsendgerät 1 dargestellt. Das Kommunikationsendgerät 1 weist ein erstes Kommunikationsmodul 2 auf. Dieses Kommunikationsmodul 2 ist eingerichtet, Daten über ein erstes Kommunikationsnetz 7 auszutauschen. Das erste Kommunikationsnetz 7 ist beispielsweise ein Mobilfunknetz, sodass das erste Kommunikationsmodul 2 ein Mobilfunk-Modul 20 ist, auch als Baseband-controller bezeichnet. In Figur 2 sind noch weitere erste Kommunikationsmodule 2 dargestellt. So ist beispielsweise ein W-LAN Modul 21 als erstes Kommunikationsmodul 2 vorgesehen, um über ein W-LAN-Netz Daten gemäß IEEE 802.11 Standard auszutauschen. Darüber hinaus ist ein Bluetooth-Modul 22 vorgesehen, um über ein Bluetooth-Netz Daten gemäß IEEE 802.15 Standard auszutauschen. Alle diese ersten Kommunikationsmodule 2 sind eingerichtet, um Daten über ein entsprechendes erstes Kommunikationsnetz 7 zu empfangen oder zu senden. Dazu werden die Module 2 an entsprechende Antennen angeschlossen, falls es sich bei den Netzen 7 um Funknetze handelt. Die Module 2 sind dazu eingerichtet, Daten für das jeweilige Netz 7 aufzubereiten, anzupassen und umzusetzen, sodass ein Datenaustausch über das jeweilige Netz 7 und der zentralen Steuereinheit 4 stattfindet.

Weiterhin ist in dem Endgerät 1 ein zweites Kommunikationsmodul 3 vorgesehen, um Daten über ein zweites Kommunikationsnetz 8 auszutauschen. Dieses Kommunikationsnetz ist ein NFC-Netz 8. An das Modul 3 ist eine Antenne 30 angeschlossen, um Daten mit einer externen NFC-Einheit, beispielsweise dem portablen Datenträger 5, auszutauschen. Das Modul 3 ist dazu eingerichtet, Daten für das NFC-Netz 8 aufzubereiten, anzupassen und umzusetzen, sodass ein Datenaustausch über das NFC-Netz 8 und der zentralen Steuereinheit 4 stattfindet.

Die zentrale Steuereinheit 4, auch Central Processing Unit, kurz CPU, genannt, ist mit den ersten Kommunikationsmodulen 2 über eine oder mehrere kontaktbehaftete Datenleitungen verbunden. Die CPU 4 ist mit dem zweiten Kommunikationsmodul 3 über eine oder mehrere kontaktbehaftete Datenleitungen verbunden. In der CPU 4 ist erfindungsgemäß eine Blockiereinheit 40 eingebracht, die die Weiterleitung von Daten über das erste Kommunikationsnetz 7 blockiert, sobald ein Datenaustausch über das zweite Kommunikationsnetz 8 stattfindet.

Die Blockiereinheit gemäß Figur 2 ist eine fest integrierte Einheit, die vom OS des Kommunikationsendgerät 1 angesteuert und eingestellt wird. Mit Blockieren wird erfindungsgemäß verstanden, dass sämtlicher Datenverkehr zwischen dem ersten Kommunikationsmodul 2 und der CPU 4 verhindert wird. Dies erfolgt beispielsweise durch ein Schaltelement auf der Datenleitung, dem Deaktivieren der Versorgungsspannung für jedes erste Kommunikationsmodul 2 oder dem Übertragen von Sinnlos-Befehlen an die Module 2, sodass die Module 2 nicht in der Lage sind, die von dem zweiten Modul 3 empfangenen Daten über das erste Kommunikationsnetz 7 weiterzuleiten. Dadurch wird der Datenverkehr komplett unterbunden. Die Blockiereinheit kann insbesondere Teil einer TEE sein, sodass das Blockieren vom Kernel des OS sichergestellt ist. Das Blockieren kann über einen kryptografischen Algorithmus zusätzlich abgesichert sein. Das Blockieren erfolgt insbesondere vollautomatisch, sobald der CPU 4 angezeigt wird, dass Daten mittels des zweiten Moduls 3 ausgetauscht werden. Das Blockieren kann somit in einer Firewall Routine des OS des Endgeräts 1 eingestellt sein.

In einer bevorzugten Ausgestaltung wird der Datenaustausch über das erste Kommunikationsnetz 7 über eine Verzögerungseinheit 42 geleitet, wenn der Datenaustausch über das zweite Kommunikationsnetz erkannt wird. Die vordefinierte Zeitspanne, die zur Verzögerung des Datenaustauschs verwendet wird, ist derart zu wählen, dass ein Relay-Angriff erkannt wird, sollte das Endgerät 1 dazu verwendet werden. Als Richtwert sollte die Zeitspanne ca. 150ms betragen, die der Datenaustausch über das erste Kommunikationsnetz verzögert wird.

Zum Aktivieren oder Deaktivieren der Blockiereinheit 40 wird der zentralen Steuereinheit 4 angezeigt, sobald der Datenaustausch mit dem zweiten Modul 3 stattfindet. Dies erfolgt entweder direkt durch das Weiterleiten der empfangenen Daten vom zweiten Modul 3 an die CPU 4 oder alternativ über ein separates Anzeigesignal, welches der CPU 4 direkt anzeigt, ob ein externes NFC-Gerät in Daten mit dem Modul 3 austauschen möchte. Das Signal wird beispielsweise beim ersten Empfang von Daten des portablen Datenträgers 5 aktiviert.

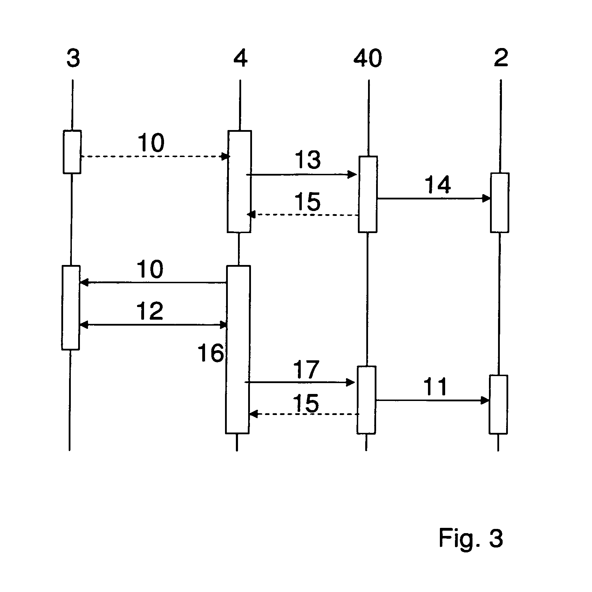

In Figur 3 ist ein Verfahrensablauf für ein erfindungsgemäßes Verfahren zum Blockieren eines Datenaustauschs skizziert.

Die CPU 4 empfängt in einer ersten Variante eine Kommunikationsanfrage 10 von dem zweiten Modul 3. Das wird in der CPU 4 als das Erkennen 13 eines Datenaustauschs 13 über das zweite Modul 3 gewertet. Dieses Erkennen 13 wird der Blockiereinheit mitgeteilt. Daraufhin blockiert die Blockiereinheit 40 den Datenaustausch über die ersten Kommunikationsmodule 2, gemäß Schritt 14. Ggf. erhält die CPU 4 eine Bestätigung 15 darüber, ob die Blockiereinheit 40 tatsächlich den Datenaustausch 11 unterbunden hat.

In einer zweiten Variante wird die Kommunikationsanfrage 10 von der CPU 4 selbst gestartet, sobald die CPU 4 gemäß Schritt 13 erkennt, dass ein Datenaustausch mit dem NFC-Modul 3 stattfinden soll.

Der Datenaustausch 12 zwischen dem Kommunikationsmodul 3 und der CPU 4 findet statt, sobald das Blockieren wirksam ist. Sobald der Datenaustausch 12 beendet ist, wird dies gemäß Schritt 16 in der CPU angezeigt. Dies kann über Erkennungseinheit 41 festgestellt werden. Wurde gemäß Schritt 16 das Beenden des Datenaustauschs 12 festegestellt, sendet die CPU 4 eine Aufforderung zum Beenden 17 der Blockierung an die Blockiereinheit 40. Diese veranlasst den Datenaustausch 11 über das erste Kommunikationsnetz 7 wieder freizugeben. Ggf. erhält die CPU 4 eine Bestätigung über die Aufhebung der Blockierung.
In einer nicht dargestellten Variante wird der Datenaustausch 11 über das erste Kommunikationsmodul 2 nicht komplett unterbunden, sondern der Datenaustausch 11 wird über eine Verzögerungseinheit 42 geleitet, die den Datenaustausch entsprechend verzögert, um einen Relay-Angriff nicht durchführen zu können.

### Bezugszeichenliste

- 1: Mobiles Kommunikationsendgerät
- 2: Erstes Kommunikationsmodul,
20 Mobilfunk-Modul
21 WLAN-Modul
21 Bluetooth-Modul
- 3: Zweites Kommunikationsmodul, NFC-Modul 30 NFC-Antenne
- 4: Zentrale Steuereinheit, CPU
40 Blockiereinheit
41 Erkennungseinheit
42 Verzögerungseinheit
- 5: Portabler Datenträger, NFC-Tag
- 6: Lesegerät, NFC-Reader
- 7: Erstes Kommunikationsnetz, Mobilfunknetz 70 Mobilfunkinstanz
- 8: Zweites Kommunikationsnetz, Nahfeldkommunikationsnetz
- 9: Zweites entferntes Kommunikationsendgerät, entfernter Kommunikationspartner
- 10: Kommunikationsanfrage
- 11: Datenaustausch über das erste Kommunikationsnetz
- 12: Datenaustausch über das zweite Kommunikationsnetz
- 13: Erkennen eines Datenaustauschs mittels des zweiten Kommunikationsnetz
- 14: Blockieren des Datenaustauschs
- 15: Bestätigung
- 16: Beenden des Datenaustauschs über das zweite Kommunikationsnetz Aufbauanfrage
- 17: Beenden der Blockierung

## Patentansprüche

1. Mobiles Kommunikationsendgerät (1) zum Austausch von Daten (11) über ein erstes Kommunikationsnetz (7) mit einem zweiten, vom ersten Kommunikationsendgerät (1) räumlich entfernten Kommunikationsendgerät (9), aufweisend:
- ein erstes Kommunikationsmodul (2), ausgebildet zum Austausch von Daten (11) mit dem zweiten Kommunikationsendgerät (9) über das erste Kommunikationsnetz (7);
- ein zweites Kommunikationsmodul (3), ausgebildet zum Austausch von Daten (12) mit einem portablen Datenträger (5) über ein zweites Kommunikationsnetz (8), insbesondere ein Nahfeldkommunikationsnetz; und
- einer zentralen Steuereinheit (4), ausgebildet zum Steuern des Datenaustauschs zwischen dem ersten Kommunikationsmodul (2) und dem zweiten Kommunikationsmodul (3)
**dadurch gekennzeichnet, dass**:
- die zentrale Steuereinheit (4) eine Blockiereinheit (40) aufweist, wobei die Blockiereinheit (40) eingerichtet ist, den Datenaustausch (11) über das erste Kommunikationsnetz (7) zu blockieren (14), sobald der zentralen Steuereinheit (4) ein Datenaustausch (12) über das zweite Kommunikationsnetz (8) angezeigt wird.

2. Kommunikationsendgerät (1) nach Anspruch 1, wobei das zweite Kommunikationsmodul (3) Mittel zum Anzeigen des Datenaustauschs (12) über das zweite Kommunikationsnetz (8) aufweist oder wobei die zentrale Steuereinheit (4) eine Erkennungseinheit (41) zum Erkennen (13) des Datenaustauschs (12) über das zweite Kommunikationsnetz (8) aufweist.

3. Kommunikationsendgerät (1) nach Anspruch 1 oder 2, wobei die Blockiereinheit (40) des Datenaustauschs (11) über das erste Kommunikationsnetz (7) solange unterbindet, bis der Datenaustausch (12) über das zweite Kommunikationsnetz (8) beendet (16) ist.

4. Kommunikationsendgerät (1) nach Anspruch 1 oder 2, wobei die Blockiereinheit (40) eine Verzögerungseinheit (42) aufweist, wobei die Verzögerungseinheit (42) den Datenaustausch (11) über das erste Kommunikationsnetz (7) zeitlich für eine vordefinierte Zeitspanne blockiert (14).

5. Kommunikationsendgerät (1) nach einem der vorhergehenden Ansprüche, wobei das erste Kommunikationsnetz (7) derart ausgestaltet ist, dass über das erste Kommunikationsnetz (7) Daten gemäß eines TCP/IP-Protokolls ausgetauscht (11) werden können.

6. Kommunikationsendgerät (1) nach einem der vorhergehenden Ansprüche, wobei das zweite Kommunikationsmodul (3) mechanisch fixiert oder mechanisch lösbar im Kommunikationsendgerät (1) integriert ist.

7. Verfahren zum Blockieren (14) eines Datenaustauschs (11) über ein erstes Kommunikationsnetz (7) zwischen einem ersten mobilen Kommunikationsendgerät (1) gemäß den vorhergehenden Ansprüchen 1 bis 6 und einem zweiten, vom ersten Kommunikationsendgerät (1) entfernten Kommunikationsendgerät (9), mit den Verfahrensschritten:
- Senden oder Empfangen einer Kommunikationsanfrage (10) über ein zweites Kommunikationsnetz (8), insbesondere ein Nahfeldkommunikationsnetz;
- Blockieren (14) des Datenaustauschs (11) über das erste Kommunikationsnetz (7) durch eine Blockiereinheit (40) innerhalb des mobilen Kommunikationsendgeräts (1);
- Austauschen (1) von Daten über das zweite Kommunikationsnetz (8) mit portablen Datenträger (5), wobei das Beenden (16) des Datenaustauschs (12) in der Blockiereinheit (40) angezeigt wird;
- Beenden (16) des Blockierens (14) des Datenaustauschs (11) über das erste Kommunikationsnetz (7) durch die Blockiereinheit (40) innerhalb des ersten mobilen Kommunikationsendgeräts (1).

8. Verfahren nach Anspruch 8, wobei die Kommunikationsanfrage (10) und der Datenaustausch (12) über das zweite Kommunikationsnetz (8) mit einem portablen Datenträger (5) durchgeführt werden.

9. Verfahren nach einem der Ansprüche 7 oder 8, wobei durch das Blockieren (14) des Datenaustauschs (11) über das erste Kommunikationsnetz (7) derart zeitlich verzögert wird, dass eine vordefinierte Zeitspanne zum Austauschen (11) der Daten über das erste Kommunikationsnetz (7) nicht unterschritten wird.

10. System zum Verhindern eines Man-in-the-Middle Angriffs mit den Systemkomponenten:
- Mobiles Kommunikationsendgerät (1) gemäß einem der Ansprüche 1 bis 6 und eingerichtet zum Datenaustausch (11) mit einem zweiten Kommunikationsendgerät (9) über ein erstes Kommunikationsnetz (7);
- Portabler Datenträger (5), eingerichtet zum Datenaustausch (12) mit dem ersten mobilen Kommunikationsendgerät (1) über ein zweites Kommunikationsnetz (8), insbesondere ein Nahfeldkommunikationsnetz;
- Zweites Kommunikationsendgerät (9), eingerichtet zum Datenaustausch (11) mit dem ersten mobilen Kommunikationsendgerät (1) über das erste Kommunikationsnetz (7), wobei das zweite Kommunikationsendgerät (9) vom mobilen Kommunikationsendgerät (1) räumlich entfernt angeordnet ist;
- Lesegerät (6) zum Austausch von Daten (12) über das zweite Kommunikationsnetz (8);
**dadurch gekennzeichnet, dass**:
- eine Blockiereinheit (40) in dem ersten Kommunikationsendgerät (1) eingerichtet ist, einen Datenaustausch (11) über das erste Kommunikationsnetz (7) mit dem zweiten Kommunikationsendgerät (9) zu blockieren (14), wenn das erste Kommunikationsendgerät (1) mit dem portablen Datenträger (5) Daten über das zweite Kommunikationsnetz (8) austauscht (12), wobei durch das Blockieren (14) ein Man-in-the-Middle Angriff verhindert wird.

## Claims

1. A mobile communication terminal (1) for exchanging data (11) via a first communication network (7) with a second communication terminal (9) that is spatially remote from the first communication terminal (1), having:
- a first communication module (2) configured for exchanging data (11) with the second communication terminal (9) via the first communication network (7);
- a second communication module (3) configured for exchanging data (12) with a portable data carrier (5) via a second communication network (8), in particular a near-field communication network; and
- a central control unit (4) configured for controlling the data exchange between the first communication module (2) and the second communication module (3),
**characterized in that**:
- the central control unit (4) has a blocking unit (40), wherein the blocking unit (40) is adapted to block (14) the data exchange (11) via the first communication network (7) as soon as a data exchange (12) via the second communication network (8) is indicated to the central control unit (4).

2. The communication terminal (1) according to claim 1, wherein the second communication module (3) has means for indicating the data exchange (12) via the second communication network (8) or wherein the central control unit (4) has a detection unit (41) for detecting (13) the data exchange (12) via the second communication network (8).

3. The communication terminal (1) according to claim 1 or 2, wherein the blocking unit (40) blocks the data exchange (11) via the first communication network (7) for such a time until the data exchange (12) via the second communication network (8) has been concluded (16).

4. The communication terminal (1) according to claim 1 or 2, wherein the blocking unit (40) has a delay unit (42), wherein the delay unit (42) blocks (14) the data exchange (11) via the first communication network (7) temporally for a predefined period of time.

5. The communication terminal (1) according to any of the preceding claims, wherein the first communication network (7) is configured such that via the first communication network (7) data can be exchanged in accordance with a TCP/IP protocol.

6. The communication terminal (1) according to any of the preceding claims, wherein the second communication module (3) is integrated in the communication terminal (1) in mechanically fixated or mechanically detachable fashion.

7. A method for blocking (14) a data exchange (11) via a first communication network (7) between a first mobile communication terminal (1) in accordance with the preceding claims 1 to 6 and a second communication terminal (9) that is remote from the first communication terminal (1), having the method steps of:
- sending or receiving a communication request (10) via a second communication network (8), in particular a near-field communication network;
- blocking (14) the data exchange (11) via the first communication network (7) by a blocking unit (40) within the mobile communication terminal (1);
- exchanging (1) of data via the second communication network (8) with a portable data carrier (5), wherein the conclusion (16) of the data exchange (12) is indicated in the blocking unit (40);
- concluding (16) the blocking (14) of the data exchange (11) via the first communication network (7) by the blocking unit (40) within the first mobile communication terminal (1).

8. The method according to claim 8, wherein the communication request (10) and the data exchange (12) are carried out via the second communication network (8) with a portable data carrier (5).

9. The method according to any of the claims 7 or 8, wherein by the blocking (14) the data exchange (11) via the first communication network (7) is so temporally delayed that a predefined period of time for exchanging (11) the data via the first communication network (7) is not undershot.

10. A system for preventing a man-in-the-middle attack, having the system components:
- a mobile communication terminal (1) according to any of the claims 1 to 6 and adapted for data exchange (11) with a second communication terminal (9) via a first communication network (7);
- a portable data carrier (5) adapted for data exchange (12) with the first mobile communication terminal (1) via a second communication network (8), in particular a near-field communication network;
- a second communication terminal (9) adapted for data exchange (11) with the first mobile communication terminal (1) via the first communication network (7), wherein the second communication terminal (9) is arranged in spatially remote fashion from the mobile communication terminal (1);
- a reading device (6) for data exchange (12) via the second communication network (8);
**characterized in that**:
- a blocking unit (40) in the first communication terminal (1) is adapted to block (14) a data exchange (11) via the first communication network (7) with the second communication terminal (9), when the first communication terminal (1) exchanges (12) data with the portable data carrier (5) via the second communication network (8), wherein by the blocking (14) a man-in-the-middle attack is prevented.

## Revendications

1. Terminal de communication (1) mobile destiné à l'échange de données (11) par l'intermédiaire d'un premier réseau de communication (7) avec un deuxième terminal de communication (9) éloigné spatialement du premier terminal de communication (1), comprenant:
- un premier module de communication (2), conçu pour l'échange de données (11) avec le deuxième terminal de communication (9) par l'intermédiaire du premier réseau de communication (7);
- un deuxième module de communication (3), conçu pour l'échange de données (12) avec un support de donnée portable (5) par l'intermédiaire d'un deuxième réseau de communication (8), en particulier un réseau de communication en champ proche; et
- une unité de commande (4) centrale, conçue commander l'échange de données entre le premier module de communication (2) et le deuxième module de communication (3),
**caractérisé en ce que**:
- l'unité de commande (4) centrale comporte une unité de blocage (40), l'unité de blocage (40) étant configurée pour bloquer (14) l'échange de données (11) par l'intermédiaire du premier réseau de communication (7) dès qu'un échange de données (12) par l'intermédiaire du deuxième réseau de communication (8) est indiqué à l'unité de commande (4) centrale.

2. Terminal de communication (1) selon la revendication 1, le deuxième module de communication (3) comportant des moyens d'indication de l'échange de données (12) par l'intermédiaire du deuxième réseau de communication (8), ou l'unité de commande (4) centrale comportant une unité de reconnaissance (41) pour la reconnaissance (13) de l'échange de données (12) par l'intermédiaire du deuxième réseau de communication (8).

3. Terminal de communication (1) selon la revendication 1 ou 2, l'unité de blocage (40) contrecarrant l'échange de données (11) par l'intermédiaire du premier réseau de communication (7) jusqu'à ce que l'échange de données (12) par l'intermédiaire du deuxième réseau de communication (8) soit achevé (16).

4. Terminal de communication (1) selon la revendication 1 ou 2, l'unité de blocage (40) comportant une unité de retardement (42), l'unité de retardement (42) bloquant (14) temporairement pour un laps de temps prédéfini l'échange de données (11) par l'intermédiaire du premier réseau de communication (7).

5. Terminal de communication (1) selon une des revendications précédentes, le premier réseau de communication (7) étant réalisé de telle façon que, par l'intermédiaire du premier réseau de communication (7), des données suivant un protocole TCP/IP peuvent être échangées (11).

6. Terminal de communication (1) selon une des revendications précédentes, le deuxième module de communication (3) étant intégré dans le terminal de communication (1) de manière fixé mécaniquement ou de manière mécaniquement amovible.

7. Procédé destiné à bloquer (14) un échange de données (11) par l'intermédiaire d'un premier réseau de communication (7) entre un premier terminal de communication (1) mobile selon les revendications précédentes de 1 à 6 et un deuxième terminal de communication (9) éloigné du premier terminal de communication (1), ayant les étapes de procédé:
- envoi ou réception d'une demande de communication (10) par l'intermédiaire d'un deuxième réseau de communication (8), en particulier un réseau de communication en champ proche;
- blocage (14) de l'échange de données (11) par l'intermédiaire du premier réseau de communication (7) par une unité de blocage (40) à l'intérieur du terminal de communication (1) mobile;
- échange (1) de données par l'intermédiaire du deuxième réseau de communication (8) avec le support de donnée portable (5), l'achèvement (16) de l'échange de données (12) étant indiqué dans l'unité de blocage (40) ;
- achèvement (16) du blocage (14) de l'échange de données (11) par l'intermédiaire du premier réseau de communication (7) par l'unité de blocage (40) à l'intérieur du premier terminal de communication (1) mobile.

8. Procédé selon la revendication 8, la demande de communication (10) et l'échange de données (12) étant effectués par l'intermédiaire du deuxième réseau de communication (8) avec un support de donnée portable (5).

9. Procédé selon une des revendications 7 ou 8, l'échange de données (11) par l'intermédiaire du premier réseau de communication (7) étant, par le blocage (14), de telle sorte retardé temporellement qu'un laps de temps prédéfini pour l'échange (11) des données par l'intermédiaire du premier réseau de communication (7) n'est pas sous-dépassé.

10. Système d'empêchement d'une attaque Man-in-the-Middle ayant les composants de système:
- terminal de communication (1) mobile selon une des revendications de 1 à 6 et configuré pour l'échange de données (11) avec un deuxième terminal de communication (9) par l'intermédiaire d'un premier réseau de communication (7);
- support de donnée portable (5), configuré pour l'échange de données (12) avec le premier terminal de communication (1) mobile par l'intermédiaire d'un deuxième réseau de communication (8), en particulier un réseau de communication en champ proche;
- deuxième terminal de communication (9), configuré pour l'échange de données (11) avec le premier terminal de communication (1) mobile par l'intermédiaire du premier réseau de communication (7), le deuxième terminal de communication (9) étant agencé de manière éloigné spatialement du terminal de communication (1);
- appareil de lecture (6) pour l'échange de données (12) par l'intermédiaire du deuxième réseau de communication (8);
**caractérisé en ce que**:
- une unité de blocage (40) est configurée dans le premier terminal de communication (1) pour bloquer (14) un échange de données (11) par l'intermédiaire d'un premier réseau de communication (7) avec le deuxième terminal de communication (9) quand le premier terminal de communication (1) échange (12) avec le support de donnée portable (5) des données par l'intermédiaire du deuxième réseau de communication (8), une attaque Man-in-the-Middle étant empêchée par le blocage (14).
